(19) Europäisches Patentamt
European Patent Office
Office européen des brevets

(11) Veröffentlichungsnummer: **0 310 774**
**A2**

(12) # EUROPÄISCHE PATENTANMELDUNG

(21) Anmeldenummer: **88112159.4**

(51) Int. Cl.⁴: **G06K 15/00 , G06K 15/22**

(22) Anmeldetag: **27.07.88**

(30) Priorität: **01.10.87 DE 3733265**

(43) Veröffentlichungstag der Anmeldung: **12.04.89 Patentblatt 89/15**

(84) Benannte Vertragsstaaten: **AT BE CH DE ES FR GB IT LI LU NL SE**

(71) Anmelder: **CADTRONIC COMPUTER-SYSTEME GmbH**
**Britanniahütte 10**
**D-5060 Bergisch-Gladbach 2(DE)**

(72) Erfinder: **Joswich, Dieter**
**Hohenstein 113**
**D-5067 Kürten(DE)**
Erfinder: **Schulte, Herbert**
**c/o Britanniahütte 10**
**D-5060 Bergisch-Gladbach 2(DE)**

(74) Vertreter: **Prüfer, Lutz H., Dipl.-Phys.**
**Harthauser Strasse 25d**
**D-8000 München 90(DE)**

(54) **Verfahren zum Erzeugen einer Kopie von einem Bild eines Bildschirmes sowie Vorrichtung zur Durchführung des Verfahrens.**

(57) Bei bekannten Koppeleinrichtungen zum Erstellen einer Papierkopie eines auf einem Bildschirm dargestellten Bildes sind technisch aufwendige und damit teure Ganzseitenbildspeicher erforderlich. Diese haben ferner den Nachteil, daß sie verhältnismäßig viel Platz brauchen. Die neue Koppeleinrichtung soll platzsparend, technisch einfach und kostengünstig sein.

Die zwischen dem Bildschirm und dem Laserdrucker angeschlossene Koppeleinrichtung 8 enthält zwei 8 k Byte RAM-Zwischenspeicher (16, 17). Die ankommenden Signale werden über ein Eingangsschieberegister (19) und einen Schreibschalter (20) in einem ersten Zwischenspeicher (16) abgelegt. Eine Steuerung durch einen Mikroprozessor (25) mit EPROM (26) aktiviert den Laserdrucker über einen Auswahl-Logik-Umschalter (23). Ist der Zwischenspeicher (16) vollgeschrieben und der Drucker druckbereit, wird der ein erstes Bildsegment darstellende Inhalt des Zwischenspeichers (16) auf dem Drucker ausgegeben. Gleichzeitig wird ein zweites Bildsegment in dem zweiten Zwischenspeicher (17) abgelegt und wird als nächstes auf dem Drucker ausgegeben, während der andere Zwischenspeicher mit dem nächsten Bildsegment beschrieben wird. Der Vorgang wird von einer Z-80-CPU (25) gesteuert.

EP 0 310 774 A2

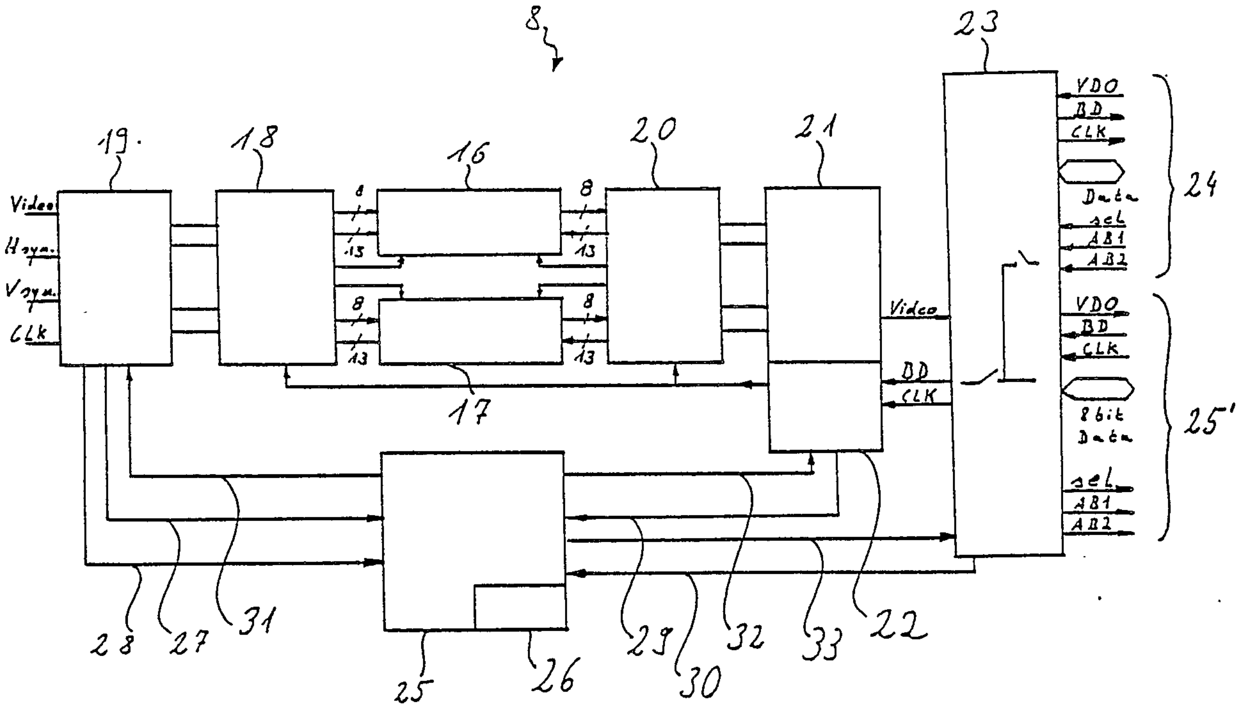
8
19
18
16
17
20
21
22
23
24
25'
25
26
27
28
29
30
31
32
33
Video
CLK
Video
BD
CLK
VDO
BD
CLK
Data
sel
AB1
AB2
VDO
BD
CLK
8bit Data
sel
AB1
AB2

FIG. 2

# Verfahren zum Erzeugen einer Kopie von einem Bild eines Bildschirmes sowie Vorrichtung zur Durchführung des Verfahrens

Die Erfindung betrifft ein Verfahren zum Erzeugen einer Kopie von einem Bild eines Bildschirmes nach dem Oberbegriff des Patentanspruches 1 sowie eine Vorrichtung zum Erzeugen einer Kopie von einem Bild eines Bildschirmes nach dem Oberbegriff des Patentanspruches 7. Das Verfahren und die Vorrichtung sollen insbesondere Anwendung finden bei der Erstellung von Kopien des Bildinhaltes eines Bildschirmes mit einem Laserdrucker.

Es ist bekannt, Kopien vom Bildinhalt eines Bildschirmes mit Hilfe eines Laserdruckers zu erstellen. Dazu ist es erforderlich, zwischen dem Bildschirm und dem Laserdrucker einen Ganzseitenspeicher vorzusehen, der die gesamte Bildinformation des Bildschirmes speichert. Der große Speicher bedeutet einen erheblichen technischen Aufwand und damit hohe Kosten.

Aufgabe der Erfindung ist es, ein Verfahren zum Erzeugen einer Kopie von einem Bild eines Bildschirmes der eingangs beschriebenen Art sowie eine Vorrichtung zur Durchführung des Verfahrens zu schaffen, mit denen die oben genannten Nachteile vermieden werden. Insbesondere sollen der technische Aufwand und damit die Kosten verringert werden.

Diese Aufgabe wird durch das Verfahren mit den Merkmalen des Patentanspruches 1 gelöst. Die Vorrichtung ist in Patentanspruch 7 gekennzeichnet.

Weitere Merkmale und Zweckmäßigkeiten der Erfindung ergeben sich aus der Beschreibung eines Ausführungsbeispieles anhand der Figuren. Von den Figuren zeigen:

Fig. 1 eine schematische Darstellung eines Systems aus dem Bildschirm, einem eingangsseitig damit verbundenen Computer und einem ausgangsseitig damit verbundenen Drucker;

Fig. 2 eine blockschaltbildartige Darstellung der erfindungsgemäßen Vorrichtung;

Fig. 3 ein Ablaufdiagramm zur Erläuterung des Verfahrens und der Vorrichtung;

Fig. 4 ein Ablaufdiagramm zur Erläuterung der Betriebsweise der in Fig. 2 gezeigten Vorrichtung;

Fig. 5a ein Ablaufdiagramm eines Teilschrittes des Arbeitsablaufes der in Fig. 2 gezeigten Vorrichtung;

Fig. 5b einen weiteren Schritt des Ablaufes der in Fig. 2 gezeigten Vorrichtung;

Fig. 6a ein Ablaufdiagramm eines Abschnittes der Betriebsweise der in Fig. 2 gezeigten Vorrichtung;

Fig. 6b ein Ablaufdiagramm eines weiteren Schrittes des Ablaufes der in Fig. 2 gezeigten Vorrichtung ;

Fig. 7 eine blockschaltartige Darstellung eines weiteren erfindungsgemäßen Ausführungsbeispieles;

Fig. 8 ein detailliertes Blockschaltbild des Eingangsschieberegisters und Zählers 19;

Fig. 9 ein detailliertes Blockschaltbild des Ausgangsschieberegisters und Zählers 21;

Fig. 10 ein Ablaufdiagramm zur Erläuterung der Betriebsweise der in Fig. 9 gezeigten Vorrichtung;

Fig. 11a ein Ablaufdiagramm eines Teilschrittes des Arbeitsablaufes der in Fig. 9 gezeigten Vorrichtung;

Fig. 11b einen weiteren Schritt des Ablaufes der in Fig. 9 gezeigten Vorrichtung;

Fig. 12a ein Ablaufdiagramm eines Abschnittes der Betriebsweise der in Fig. 9 gezeigten Vorrichtung; und

Fig. 12b ein Ablaufdiagramm eines weiteren Schrittes des Ablaufes der in Fig. 9 gezeigten Vorrichtung.

Die in Fig. 1 gezeigte Datenverarbeitungseinrichtung umfaßt ein Rechnersystem 1 mit einer Bildaufbereitungseinrichtung 2, einem Schnittstellenmodul 3 mit den herkömmlichen Schnittstellen 4 (RS 232) und 5 (Reihenausgang). Über eine Leitung 6 ist ein Bildschirmgerät 7 eingangsseitig mit dem Ausgang der Bildaufberei tungseinrichtung 2 verbunden. Ausgangsseitig ist das Bildschirmgerät 7 über eine Koppeleinrichtung 8 mit einem Laserdrucker 9 verbunden. Der Laserdrucker 9 umfaßt neben seinem eigentlichen Druckerteil 10 eine Steuerung 11, eine Logik 12 sowie den Schnittstellen 4 und 5 entsprechende Schnittstellen 13 (RS 232) und einen Reiheneingang 14.

Wie die Figur zeigt, kann die Koppeleinrichtung 8 direkt über eine Leitung 15 mit einem zusätzlichen Ausgang des Bildschirmgerätes 7 verbunden sein, wenn dieses einen solchen aufweist.

Die in Fig. 2 gezeigte Koppeleinrichtung 8 umfaßt einen ersten Zwischenspeicher 16 und einen parallel zu diesem angeordneten zweiten Zwischenspeicher 17. Die beiden Speicher sind als 8 k Byte RAM-Speicher ausgebildet.

Eingangsseitig sind die Speicher 16, 17 mit einem Schreibschalter 18 über die erforderlichen 8 Datenleitungen und 13 Adreßleitungen verbunden. Der Schreibschalter 18 ist eingangsseitig mit einem Eingangsschieberegister und Zähler 19 verbunden, welcher seinerseits über die Leitung 6 oder die Leitung 15 in Fig. 1 mit den Video-, Horizontalsynchronisations-, Vertikalsynchronisations-und Taktsignalen beaufschlagt wird.

Ausgangsseitig sind die beiden Speicher 16, 17 mit einem Leseschalter 20 über entsprechende 8 Datenleitungen und 13 Adreßleitungen verbunden. Der Leseschalter 20 wiederum ist ausgangsseitig mit einem Ausgangsschieberegister und Zähler 21 verbunden. Ferner weist die Schaltung eine Umschaltsteuerung 22 auf, die ausgangsseitig mit Eingängen des Schreibschalters 18 und des Leseschalters 20 verbunden ist.

Ausgangsseitig ist das Ausgangsschieberegister 21 mit einem Auswahl-Logik-Umschalter 23 verbunden. Dieser Umschalter ist über eine erste Gruppe 24 von Datenleitungen mit der Logik 12 und einer zweiten Gruppe 25 von Datenleitungen mit der Steuerung 11 verbunden.

Der Auswahl-Logik-Umschalter 23 ist ferner ausgangsseitig über eine Beam-Detect-Leitung (BD) und eine Taktleitung (Clk) mit der Umschaltsteuerung 22 verbunden.

Ferner ist eine durch einen Mikroprozessor gebildete Steuerung 25 vorgesehen. In dem Ausführungsbeispiel handelt es sich bei dem Mikroprozessor um einen Z-80-Typ. Der Mikroprozessor umfaßt ein EPROM 26. Eingangsseitig ist der Mikroprozessor über Leitungen 27 und 28 mit dem Eingangsschieberegister zur Übertragung der Horizontal- und Vertikal-Synchronisationssignale, über eine Leitung 29 mit der Umschaltsteuerung 22 zum Übertragen eines Segment-Signales und über eine Leitung 30 mit dem Auswahl-Logik-Umschalter 23 zur Übertragung eines Video-Synchronisation-Nachfragesignales verbunden. Ausgangsseitig ist der Mikroprozessor 25 über eine Leitung 31 mit dem Eingangsschieberegister zur Übertragung eines Start-Signales, über eine Leitung 32 zur Übertragung eines Steuersignales mit der Umschaltsteuerung 22 und über eine Leitung 33 mit dem Auswahl-Logik-Umschalter 23 zur Übertragung eines Auswahlsignales verbunden.

Bei der Koppeleinrichtung 8 werden die Daten des Bildschirmgerätes 7 über das Eingangsschieberegister 19 und den Schreibschalter 18 in eine der Zwischenspeicher 16, 17 abgelegt. Auf der dazu symmetrisch aufgebauten Ausleseseite der Zwischenspeicher legt der Leseschalter 20 die ausgewählten Daten an das Ausgangsschieberegister 21. Von diesem werden die Daten über den Auswahl-Logik-Umschalter 23 an den Laserdrucker 9 übertragen. Der Ablauf wird über den Mikroprozessor 25 gesteuert und synchronisiert.

Im weiteren wird die Arbeitsweise insbesondere unter Bezugnahme auf die Figuren 3 bis 6b erläutert. Der Betrieb wird zunächst durch Eingeben eines Reset-Befehles gestartet und initialisiert.

Die Steuerung prüft, ob das System gerade erst eingeschaltet wurde. Ist dies der Fall, veranlaßt die Steuerung einen Sprung ohne Rückkehr und löscht den Inhalt der Zwischenspeicher 16 und 17. Auf diese Weise wird der Inhalt der Zwischenspeicher durch Überschreiben mit Nullen in einen definierten Zustand gebracht, der gleichzeitig Schmutzeffekte auf dem Bild ausschließt, da Null einem weißen bzw. leeren Hintergrund entspricht. Die Koppeleinrichtung arbeitet zeilenorientiert, so daß in nicht ganz vollgeschriebenen Zeilen Schmutzeffekte vermieden werden, die auftreten könnten, wenn undefinierte Zustände der restlichen Speicherplätze einer nicht ganz vollgeschriebenen Zeile vorhanden wären.

Die Signale werden vom Bildschirm der Koppeleinrichtung 8 über das Verbindungskabel gepuffert zugeführt. Es erfolgt eine Auffrischung des Signalpegels.

Das Videosignal besteht zu diesem Zeitpunkt aus einem zeitlichen Nacheinander von Helligkeitsinformationen, die zu je 8 elementaren Bildpunkten in 8 Bit zusammengefaßt werden. Der Inhalt einer Bildzeile wird nach Abfallen des entsprechenden Horizontal-Synchronisationssignales bis zu dessen erneutem Ansteigen in einem der Zwischenspeicher 16, 17 so abgelegt, daß jeweils 8 Bildpunkte mit dem Bildpunkt-Taktsignal in das Eingangsschieberegister eingelesen werden und dann parallel in dem 8192 Byte großen Zwischenspeicher 16 oder 17 ihren Platz finden. Je Bildzeile stehen 256 Byte zur Verfügung entsprechend 2048 Bildpunkten pro Zeile. Werden von Synchronisationsimpuls zu Synchronisationsimpuls weniger als 256 Byte im Speicher belegt, so bleibt der verbleibende Zeilenspeicherraum frei. Jeder Zeilensynchronisationsimpuls schaltet die Adressierung im Speicher auf die nächste 256-Byte-Grenze. Demnach können in einem Zwischenspeicher pro 8 k Byte 32 Zeilen abgespeichert werden. Ist ein Zwischenspeicher gefüllt, wird sein Inhalt über das Ausgangsschieberegister 21 und den Auswahl-Logik-Umschalter 23 zeilenweise auf den Laserdrucker 9 ausgegeben. Der Auslesevorgang entspricht dem Einlesevorgang. Die Ausgabe wird durch einen entsprechenden Synchronisationsimpuls ausgelöst. Die Zeile wird so lange gelesen, bis der nächste Synchronisationsimpuls des Laserdruckers ein Umschalten auf die nächste Zeile (256-Byte-Grenze) bewirkt.

Während nach dem Start der Laserdrucker 9 das in dem ersten Zwischenspeicher 16 zuerst gespeicherte Bildsegment (32 Zeilen) ausdruckt, speichert die Koppeleinrichtung in dem zweiten 8 k Byte Zwischenspeicher 17 das nächste Bildsegment. Die zwei Bildsegmentspeicher 16, 17 werden in dieser Weise abwechselnd benutzt, bis das Bild abgearbeitet ist. Dabei wird das Einlesen der entsprechenden Bildzeilen von dem Mikroprozessor 25 überwacht und gesteuert.

Wie am besten in Fig. 4 zu sehen ist, wird nach einem Reset der CPU, der Initialisierung und "Power up" gleich "Nein" (die Speicher sind in definiertem Zustand) in einer folgenden Schleife das Vertikal-Synchronisationssignal gesucht. Ist dies empfangen worden (Ja), wird der Zeilenzähler (LZ) auf Null gesetzt und die Anfangszeile, ab der das Bild eingelesen werden soll, in der Variablen "Soll" durch den Wert "Start" festgelegt. In einer nächsten Schleife sucht der Zeilenzähler (LZ) den Anfang des Bildes, der dann gefunden ist, wenn LZ gleich Soll ist. Jetzt wird das erste Segment mit 32 Zeilen des Bildschirmes in den ersten Zwischenspeicher 16 eingelesen, wie in Fig. 4 durch "Start Video lesen" symbolisiert ist.

Die Mikroprozessorsteuerung 25 stellt die Verbindung mit dem Laserdrucker über den Auswahl-Logik-Umschalter 23 her. In Fig. 4 ist dies mit "Start Videoprinter" symbolisiert. Hat sich der Laserdrucker 4 mit "Printer ready" gemeldet, steht fest, daß der Drucker fertig ist zum Ausführen des Druckens. Die in dem ersten Zwischenspeicher 16 gespeicherten Daten werden auf dem Drucker ausgegeben.

Wie am besten in Fig. 3 zu verfolgen ist, werden jetzt gleichzeitig die nächsten 32 Bildzeilen in den anderen Zwischenspeicher 14 eingelesen.

Die Steuerung erfolgt im wesentlichen durch zwei Interrupt-Zweige, die in Fig. 5 skizziert sind. Der häufiger genutzte Interrupt NMI (non maskable interrupt) wird bei jeder Zeile mit dem Horizontal-Synchronisationsimpuls aktiviert, wie aus Fig. 2 durch den an die Mikroprozessorsteuerung 25 angelegten Horizontal-Synchronisationsimpuls zu erkennen ist. Der Interrupt NMI erhöht den Zeilenzähler LZ. Dann arbeitet die Mikroprozessorsteuerung 25 die Befehle ab einer Stelle "Retn" ab.

Der zweite verwendete Interrupt INT tritt dann ein, wenn ein Bildsegment fertig ausgedruckt worden ist. Der Segmentzähler (Segm) in Fig. 5 wird um 1 erhöht, und es wird festgestellt, ob noch weitere Segmente zum Ausdrucken zur Verfügung stehen. Ist das Bild noch nicht zu Ende ausgedruckt, folgen also noch weitere Segmente, so wird in einem Nebenzweig "READ" (Fig. 6a) ein weiteres Bildsegment in den entsprechend anderen Zwischenspeicher eingelesen, nachdem die Variable "Soll" um 32 (der Breite eines Bildsegmentes entsprechend) erhöht wurde, der Vertikal-Synchronisationsimpuls erkannt wurde und der Zeilenzähler LZ gleich Soll gesetzt worden ist. Ist das Bildschirmbild zu Ende, folgt dem Interrupt INT ein Nebenzweig "End" (Fig. 6b), der an den Drucker den Befehl - "Stop drucken" - gibt.

Bei der Verarbeitung von Bildern ohne Zeilensprung (Halbbildverfahren) werden je Segment 32 Zeilen in einem Abstand eingelesen, den der Laserdrucker zum Ausdrucken eines Segmentinhaltes benötigt.

Bei einer Verarbeitung von Bildern nach dem Zeilensprung-Verfahren erkennt das Mikroprozessorsystem am Bildsynchronisationsimpuls die gerade oder ungerade Zeilenzahl des Halbbildes. Es wer den 16 Zeilen aus dem Bild in die entsprechenden Speicherbereiche eingelesen. Aus dem darauffolgenden passenden Halbbild werden die restlichen 16 Zeilen eingelesen. Dann wird das Segment zum Ausdrucken freigegeben.

So kann durch direktes Ansteuern der Lasereinheit eine Seite in ca. 7 Sekunden gedruckt werden.

In dem oben beschriebenen Verfahren wird jeder Bildpunkt des Bildschirmes als binäres Einzelelement gespeichert und ohne eine Veränderung des Bildformates wieder ausgedruckt. Bei gängigen Bildschirmformaten von 320 x 200 bis 1280 x 1024 Bildpunkten besteht durch eine binäre Teilung der Auslesefrequenz der Bildpunkte die Möglichkeit einer Veränderung des Horizontalmaßstabes und durch ein mehrfaches Ausdrucken einer Bildzeile die Möglichkeit einer Vertikalvergrößerung. Der Vergrößerungsfaktor für die Maßstabsänderung kann zwischen 1 und 8 je Richtung ganzzeilig frei gewählt werden. Die Steuerung geschieht durch das Mikroprozessorsystem. Auf diese Weise kann auch von Bildschirmen mit einem Bildseitenverhältnis ungleich 1 durch Anpassen an das Papierformat eine Kopie erstellt werden.

Im folgenden wird ein zweites Ausführungsbeispiel dieser Erfindung anhand der Figuren 7 bis 12b dargestellt. Bei dieser Ausführung wird das Bildschirmbild nach einer Drehung um 90° bzw. 270° an den Drucker ausgegeben. Dazu wird das Bildschirmbild nicht mehr in vollständigen Zeilen eingelesen und ausgegeben (wie im ersten Ausführungsbeispiel), sondern in Bildabschnitten.

Ein Bildabschnitt besteht aus Z untereinanderliegenden Zeilenabschnitten, wobei jeder Zeilenabschnitt eine vorbestimmte Anzahl, beispielsweise 128 Bildpunkte enthält. Eine vollständige Zeile enthält 1024 Bildpunkte; demnach kann das gesamte Bildschirmbild, das aus Z vollständigen Zeilen besteht, in 8 Bildabschnitte unterteilt werden. Die Numerierung der Bildpunkte einer jeden Zeile erfolgt so, daß der äußerst links gelegene Bildpunkt die Nummer 1, der davon rechts nächstliegende Bildpunkt die Nummer 2 und so weiter bis zum äußerst rechts gelegenen Bildpunkt, der die Nummer 1024 erhält.

Der erste einzulesende Bildabschnitt ist der äußerst rechts gelegene Bildabschnitt, also derjenige, der zeilenweise jeweils bei den Bildpunkten Nr. 896 (= 1024 - 128) beginnt und bei den Bildpunkten Nr. 1024 endet. Dieser Bildabschnitt (und entsprechend alle weiteren) wird nun so in den Speicher eingelesen, daß der Verlauf des Bildabschnittes spiegelsymmetrisch im Speicher abgebildet ist. Hierzu werden die Bildpunkte des Bildabschnittes zeilenweise (von 1 bis Z) so eingelesen, daß der erste Bildpunkt (Nr. 896) in die höchste Speicheradresse abgelegt wird, und der letzte Bildpunkt (Nr. 1024) in die niedrigste Speicheradresse abgelegt wird. Dabei werden jeweils 8 Bildpunkte zu einem Byte (= 8 Bit) zusammengefaßt eingelesen und zwar so, daß die Reihenfolge der 8 Bildpunkte jeweils umgedreht (rückwärts) in den Speicher abgebildet wird.

Das Drucksteuerwerk liest nun Bildabschnitt nach Bildabschnitt in der Form aus, daß, beginnend mit der ersten Adresse, im Bildabschnitt jeweils der Inhalt eines der 8 Bits eines Speicherbytes - von Bit 0 beginnend - Zeilenabschnitt für Zeilenabschnitt ausgelesen wird. Ist das achte Bit des ersten Byte aller Zeilenadressen ausgelesen, wird die nächste Gruppe von Bytes adressiert.

Die Figuren 7 bis 9 zeigen in Blockschaltbildern eine Möglichkeit zur Realisierung des zweiten Ausführungsbeispiels, wobei die Funktion der Elemente 19 und 21 im einzelnen aus der Fig. 8 und der Fig. 9 hervorgeht.

Der Eingangspuffer 19a und das Schieberegister 19b dienen wie beim ersten Ausführungsbeispiel zur Auffrischung und Weitergabe der Bildschirmsignale (Fig. 7). Mit diesen verbunden ist ein Ablaufsteuerwerk 19e, das durch Leitungen 27, 28, 31 durch den Rechner 25 angesteuert wird. Zusätzlich ist jetzt ein Vergleicher 19c vorgesehen, der nach Auswahl des jeweiligen einzulesenden Bildabschnittes durch den Rechner über die Leitung 34 aktiviert wird, und der nach Erreichen dieses Bildabschnittes einen Schreibimpuls an den Schreibschalter 18 sendet, aufgrund dessen die anstehenden Daten in den Speicher eingelesen werden.

Ferner sind mit dem Ablaufsteuerwerk auch zwei Zähler 19d, 19f verbunden, die die Auswahl der anzusteuernden Adressen des Speichers treffen. Der Rückwärtszähler 19d aktiviert die Adressen 0 bis 3 für jeweils 8 Bildpunkte, und der Zeilenzähler 19f steuert die Adressen 4 bis 14 zur Auswahl der einzulesenden Zeilenabschnitte an.

Aus dem Schaltbild nach Fig. 9 geht die Realisierung des Auslesens der Bildabschnitte an den Drucker hervor. Die Daten des auszudruckenden Bildabschnittes werden punktweise durch einen Selektor 21c ausgelesen, wobei jeweils 8 Bits in der richtigen Reihenfolge, also von Bit 0 beginnend, ausgegeben werden. Die Adressierung des Speichers erfolgt durch den Druckpunktezähler 21g und den Auswahlschalter 21f. Der Auswahlschalter 21f steuert zusätzlich den Schreibschalter 18 und den Leseschalter 20 über die Leitung "Schalter" an, und sendet ferner bei Erreichen des Abschnittsendes ein entsprechendes Signal an den Rechner über die Leitung 29.

Des weiteren sind in Fig. 8 zwei variable Teiler für die Druckzeilen 21a und für die Druckpunkte 21d vorgesehen, die es ermöglichen, eine (beliebig) andere als die vom Laserdrucker vorgegebene Taktung zu verwenden und somit eine Stauchung bzw. Dehnung des auszudruckenden Bildes in Richtung der Druckerzeilen zu erreichen, die nicht durch ganzzahlige Multiplikation und nicht durch Interpolation erfolgt. Dazu wird das intern erzeugte Taktsignal ("Clk") an dem Zeilensynchron signal des Druckers ("BD") vom Rechner und von den über die Leitung 32 damit verbundenen Zählern 21a und 21d synchronisiert.

Mit den von den Teilern 21a, 21d erzeugten Signalen werden der Druckzeilenzähler 21b und (eventuell über einen Vorlaufzähler 21e) der Druckpunktezähler 21g zum Anwählen der Speicheradressen angesteuert. Mit dem Vorlaufzähler 21e kann nach Bedarf durch Leerzählen einer vorgegebenen Anzahl von Bildpunkten ein Blattrand eingestellt werden, der nicht bedruckt wird, bzw. eine Verschiebung des auszudruckenden Bildes auf dem Blatt erreicht werden.

Im weiteren wird die Arbeitsweise des zweiten Ausführungsbeispieles unter Bezugnahme auf die Figuren 10 bis 12b (die den Figuren 4 bis 6b des ersten Ausführungsbeispieles entsprechen) erläutert. Der Betrieb wird zunächst durch Eingeben eines RESET-Befehles gestartet und initialisiert, der Speicherinhalt wird gelöscht. In der folgenden Schleife (Fig. 10) "Startsignal ?" wird nun das Startsignal gesucht, das von außen über eine (nicht gezeigte) Leitung dem Rechner den Beginn des Verfahrens anzeigt. Dann kann nach Empfang des "Vsynch?"-Signales, also des Vertikal-Synchronisationssignales, der erste Bildabschnitt in den ersten Zwischenspeicher 16 eingelesen werden. Der Zeilenzähler wird jetzt nicht mehr software-mäßig verwirklicht (vergleiche Fig. 4), sondern hardware-mäßig, d.h. das Zeilenzählen bzw. das richtige Adressieren des Speichers, in den der Bildabschnitt abgebildet werden soll, wird durch den Rückwärtszähler 19d und den Zeilenzähler 19f vorgenommen. Die Größe des benötigten Speichers entspricht der Menge der Bildpunkte eines Bildabschnittes. In diesem Fall werden Speicher mit einer Kapazität von 32 k Byte verwendet.

Mit dem nächsten "Vsynch?"-Signal wird der nächste Bildabschnitt in den zweiten Speicher 17 eingelesen und gleichzeitig die Daten aus dem ersten Speicher 16 nach Empfang der "Printer ready?"-Meldung an den Drucker ausgelesen.

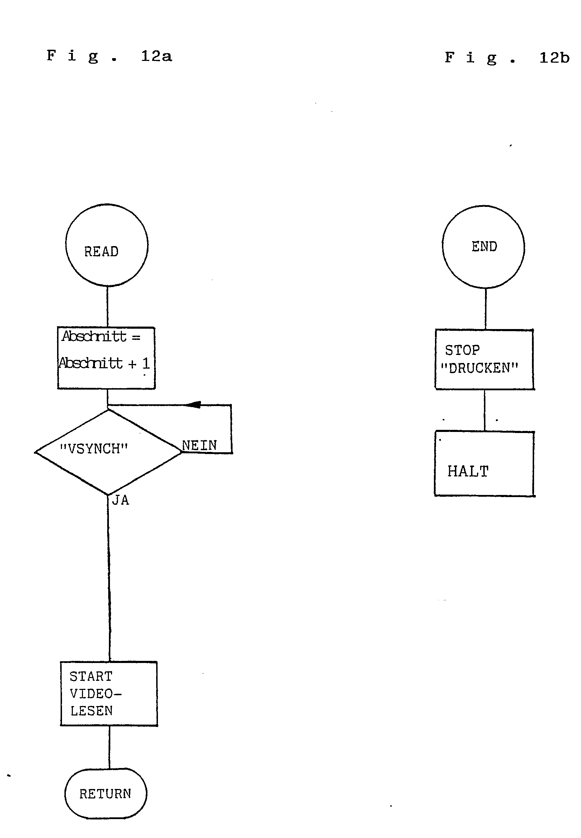

Bei der Steuerung des Ablaufes werden wie im vorigen Ausführungsbeispiel im wesentlichen zwei Interruptzweige "NMI" (Fig. 11a) und "INT" (Figuren 11b, 12a, 12b) verwendet.

Der Interruptzweig "NMI", der den Zeilenzähler LZ (software-mäßig) erhöht, wird beim zweiten Ausführungsbeispiel nur noch bedingt verwendet, nämlich beim Verarbeiten von Bildabschnitten im Halbbildverfahren, da ansonsten das Zeilenzählen jetzt hardware-mäßig verwirklicht ist.

Der zweite verwendete Interrupt "INT" (Fig. 11b) mit den Nebenzweigen "READ" (Fig. 12a) und "END" (Fig. 12b) tritt ein, wenn ein Bildabschnitt fertig ausgedruckt worden ist. Der Abschnittszähler in Fig. 11b wird um Eins erhöht, und es wird festgestellt, ob alle Bildabschnitte ausgedruckt wurden. Falls ja, veranlaßt der Nebenzweig "END" nach Fig. 12b den entsprechenden Befehl "STOP DRUCKEN" an den Drucker, und der Rechner geht in Haltestellung "HALT" über. Die Haltestellung der CPU 25 wird durch einen weiteren nicht gezeigten Interruptbefehl wieder aufgehoben. Falls das Bild noch nicht zu Ende ausgedruckt ist, wird erneut in einem Nebenzweig "READ" (Fig. 12a) ein weiterer Bildabschnitt in den entsprechend anderen Zwischenspeicher eingelesen, nachdem der Abschnittszähler um Eins erhöht wurde, und der Vertikal-Synchronisationsimpuls erkannt wurde.

Zur Darstellung von farbigen Bildschirminhalten werden beispielsweise 16 Farben 16 Graustufen zugeordnet und durch Erhöhen der Speicherbreite der Koppeleinrichtung auf beispielsweise 32 Bit verarbeitet. Dadurch wird jeder Bildpunkt durch eine einer Bildrasterung im Druckverfahren ähnliche Grauerzeugung in 16 Stufen in Form eines Druckpunktquadrates abgebildet. Die Anpassung der Koppeleinrichtung auf ein dementsprechendes Bildschirmgerät erfolgt in der Steuerlogik der Mikroprozessorsteuerung 25.

Die Koppeleinrichtung 8 läßt sich auf einer Leiterplatte zum Einbau in einen Laserdrucker oder als frei stellbares Gerät mit integriertem Netzteil realisieren.

Aufgrund des beschriebenen Verfahrens wird ein Endlosausdruckvorgang der auf dem Bildschirm gezeigten Daten ermöglicht.

## Ansprüche

1. Verfahren zum Erzeugen einer Kopie von einem Bild eines Bildschirmes (7) mit einem Zwischenspeicher und Zuführen der zwischengespeicherten Daten an einen Drucker (9),
dadurch gekennzeichnet, daß jeweils Segmente des Bildes durch einen durch Bildschirmsignale angesteuerten Teil einer Koppeleinrichtung (8) abwechselnd in einen ersten und einen zweiten Zwischenspeicher (16,17) gespeichert und während des Einlesens in den zweiten Speicher (17) die Daten aus dem ersten Speicher (16) und während des Einlesens in den ersten Speicher (16) die Daten aus dem zweiten Speicher (17) durch einen durch Druckersignale angesteuerten Teil der Koppeleinrichtung (8) an den Drucker (9) ausgelesen werden.

2. Verfahren nach Anspruch 1,
dadurch gekennzeichnet, daß die Bildsegmente zeilenorientiert gebildet und abgespeichert werden.

3. Verfahren nach Anspruch 1,
dadurch gekennzeichnet, daß die Bildsegmente in Bildabschnitten gebildet und abgespeichert werden.

4. Verfahren nach Anspruch 1 oder 3,
dadurch gekennzeichnet, daß die Bildabschnitte um $90^\circ$ bzw. $270^\circ$ gedreht ausgedruckt werden.

5. Verfahren nach Anspruch 1, 3 oder 4,
dadurch gekennzeichnet, daß durch Ändern des zum Druck benötigten Taktsignales eines Stauchung bzw. Dehnung des Bildes in Richtung der Druckerzeilen beim Ausdrucken erreicht wird.

6. Verfahren nach Anspruch 1 oder 2,
dadurch gekennzeichnet, daß durch Vervielfachen der Bildpunkte und entsprechendes Vervielfachen der Bildzeilen eine Formatanpassung zwischen Bildschirmformat und Papierformat erfolgt.

7. Verfahren nach einem der Ansprüche 1 bis 6,
dadurch gekennzeichnet, daß farbige Bildschirminhalte durch Umwandeln der Farben in mehrere Graustufen zur Darstellung durch eine Bildrasterung im Druckverfahren und durch Erhöhen der Speicherbreite der Zwischenspeicher verarbeitet werden.

8. Verfahren nach einem der Ansprüche 1 bis 7,
dadurch gekennzeichnet, daß ein Endlosausdruckvorgang der auf dem Bildschirm gezeigten Daten ermöglicht wird.

9. Verfahren nach einem der Ansprüche 1 bis 8,
dadurch gekennzeichnet, daß bei der Verarbeitung von Bildern ohne Zeilensprung je Segment eine bestimmte Anzahl Zeilen eingelesen wird und bei der Verarbeitung von Bildern mit Zeilensprung nach Ermittlung der geraden oder ungeraden Zeilenzahl aus dem Bildsynchronisationsimpuls durch den Mikroprozessor eine erste Hälfte der bestimmten Anzahl von Zeilen in entsprechende Speicherbereiche eingelesen wird und aus dem darauffolgenden passenden Halbbild eine verbleibende zweite Hälfte der bestimmten Anzahl von Zeilen eingelesen wird.

10. Vorrichtung zum Erzeugen einer Kopie von einem Bild eines Bildschirmes mit einem Zwischenspeicher, der mit dem Bildschirm verbunden ist, und einem mit dem Ausgang des Speichers verbundenen Drucker (9),
dadurch gekennzeichnet, daß eine Koppeleinrichtung (8) mit einem Teil, der Bildschirmsignale verarbeitet und bewirkt, daß die Segmente des Bildes abwechselnd in einen ersten und einen zweiten Speicher (16,17) eingelesen werden, und einem Teil, der Druckersignale verarbeitet und bewirkt, daß während des Einlesens in den zweiten Speicher (16) die Daten aus dem ersten Speicher (16) und während des Einlesens in den ersten Speicher (16) die Daten aus dem zweiten Speicher (17) an den Drucker (9) ausgelesen werden, vorgesehen ist.

11. Vorrichtung nach Anspruch 10,
dadurch gekennzeichnet, daß die Koppeleinrichtung (8) Zähler-und Teilerschaltungen (21a - 21g) aufweist, die durch Ändern des zum Druck benötigten Taktsignales eine Stauchung bzw. Dehnung des Bildes in Richtung der Druckerzeilen beim Ausdrucken bewirken.

12. Vorrichtung nach Anspruch 10 oder 11,
dadurch gekennzeichnet, daß diese auf einer Leiterplatte in einen Drucker (9) oder in ein Bildschirmgerät (7) eingebaut ist.

13. Vorrichtung nach einem der Ansprüche 10 bis 12,
dadurch gekennzeichnet, daß diese als frei stellbares Gerät mit Netzteil ausgebildet ist.

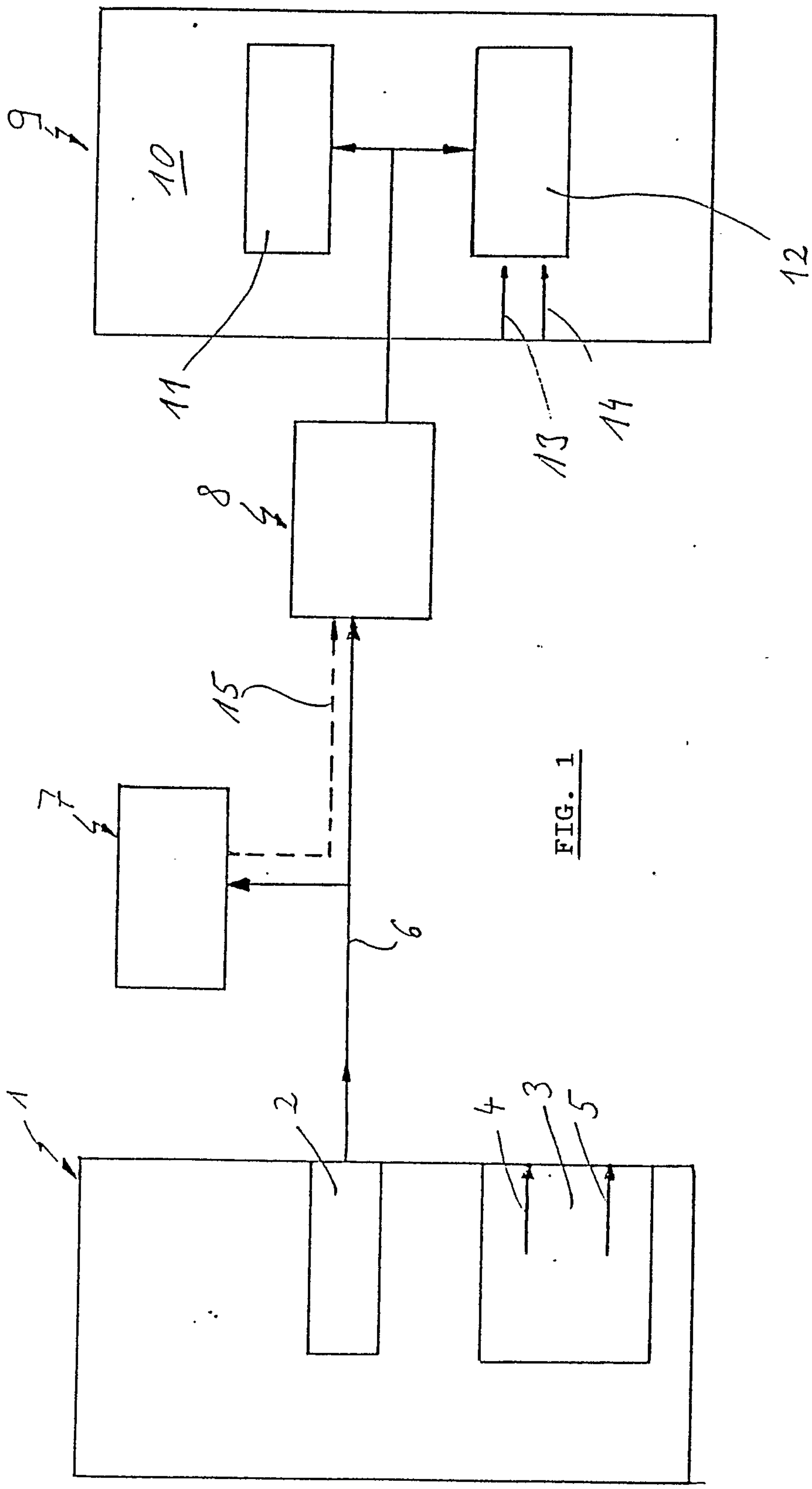


FIG. 1

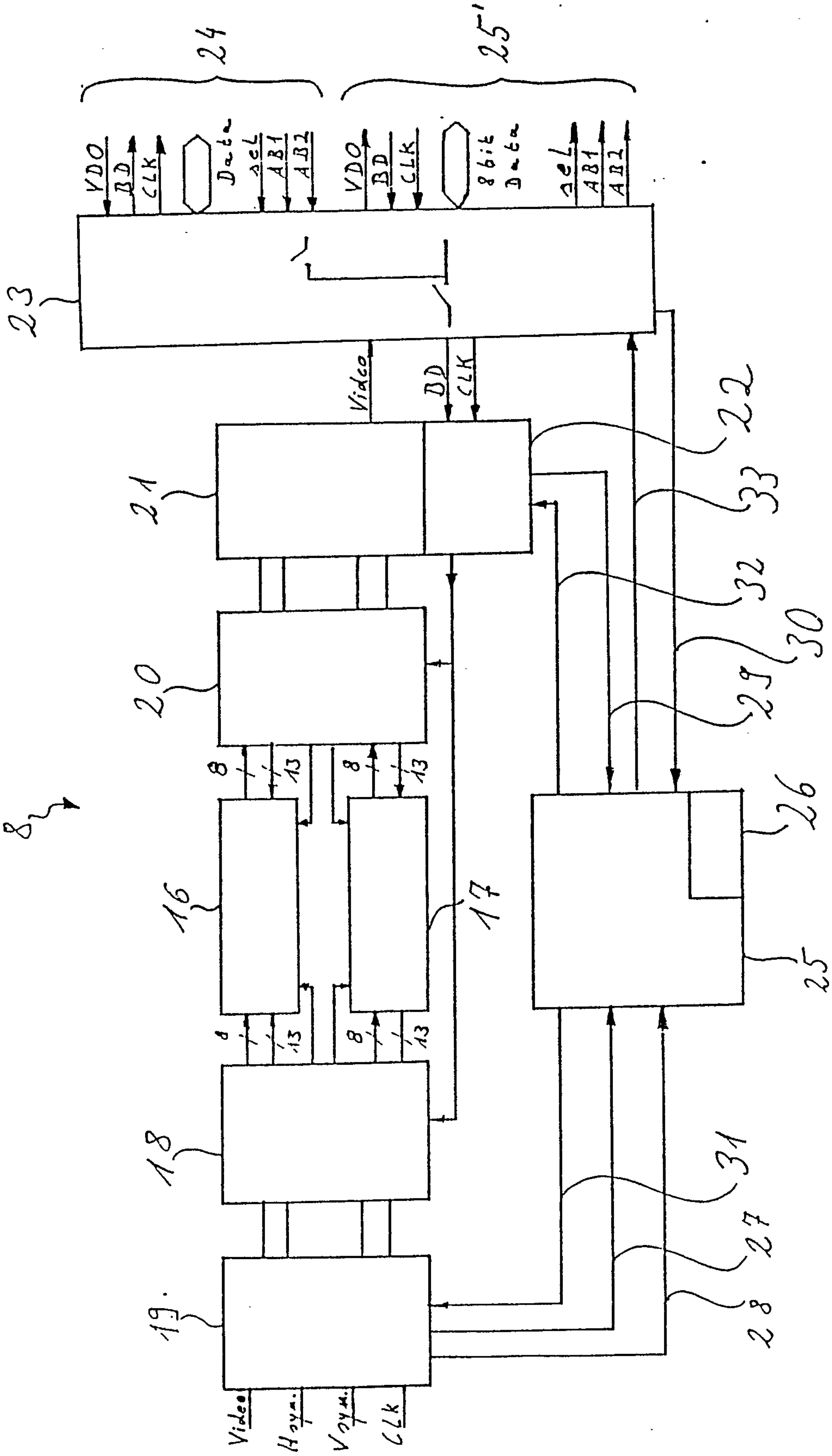

24
25'
VDO
BD
CLK
Data
sel
AB1
AB2
8 bit Data
23
Video
21
22
33
32
30
29
20
8
13
16
17
26
25
18
31
27
28
19
Hsync
Vsync


FIG. 2

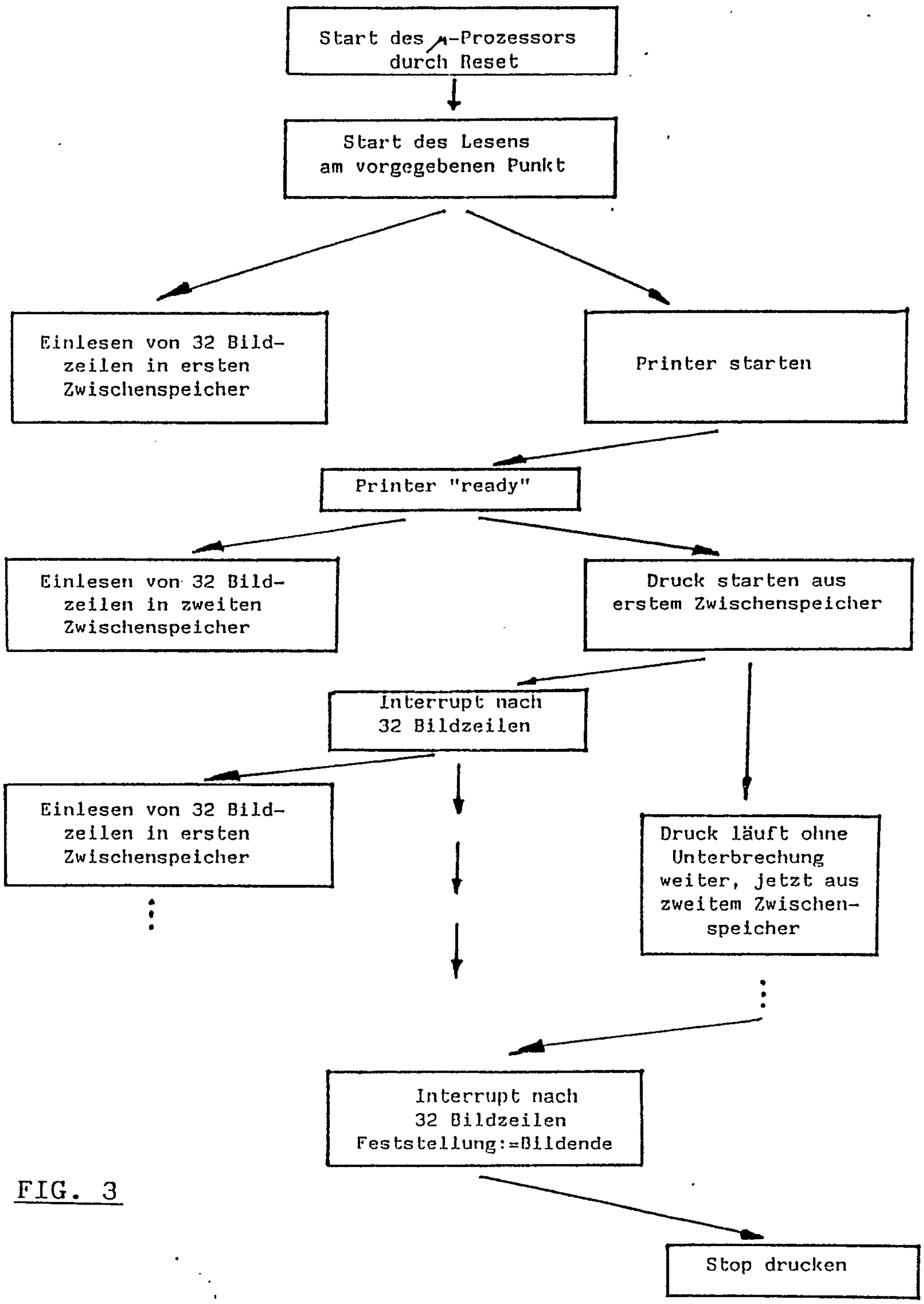
Start des μ-Prozessors durch Reset
Start des Lesens am vorgegebenen Punkt
Einlesen von 32 Bildzeilen in ersten Zwischenspeicher
Printer starten
Printer "ready"
Einlesen von 32 Bildzeilen in zweiten Zwischenspeicher
Druck starten aus erstem Zwischenspeicher
Interrupt nach 32 Bildzeilen
Einlesen von 32 Bildzeilen in ersten Zwischenspeicher
Druck läuft ohne Unterbrechung weiter, jetzt aus zweitem Zwischenspeicher
Interrupt nach 32 Bildzeilen Feststellung:=Bildende
Stop drucken

FIG. 3

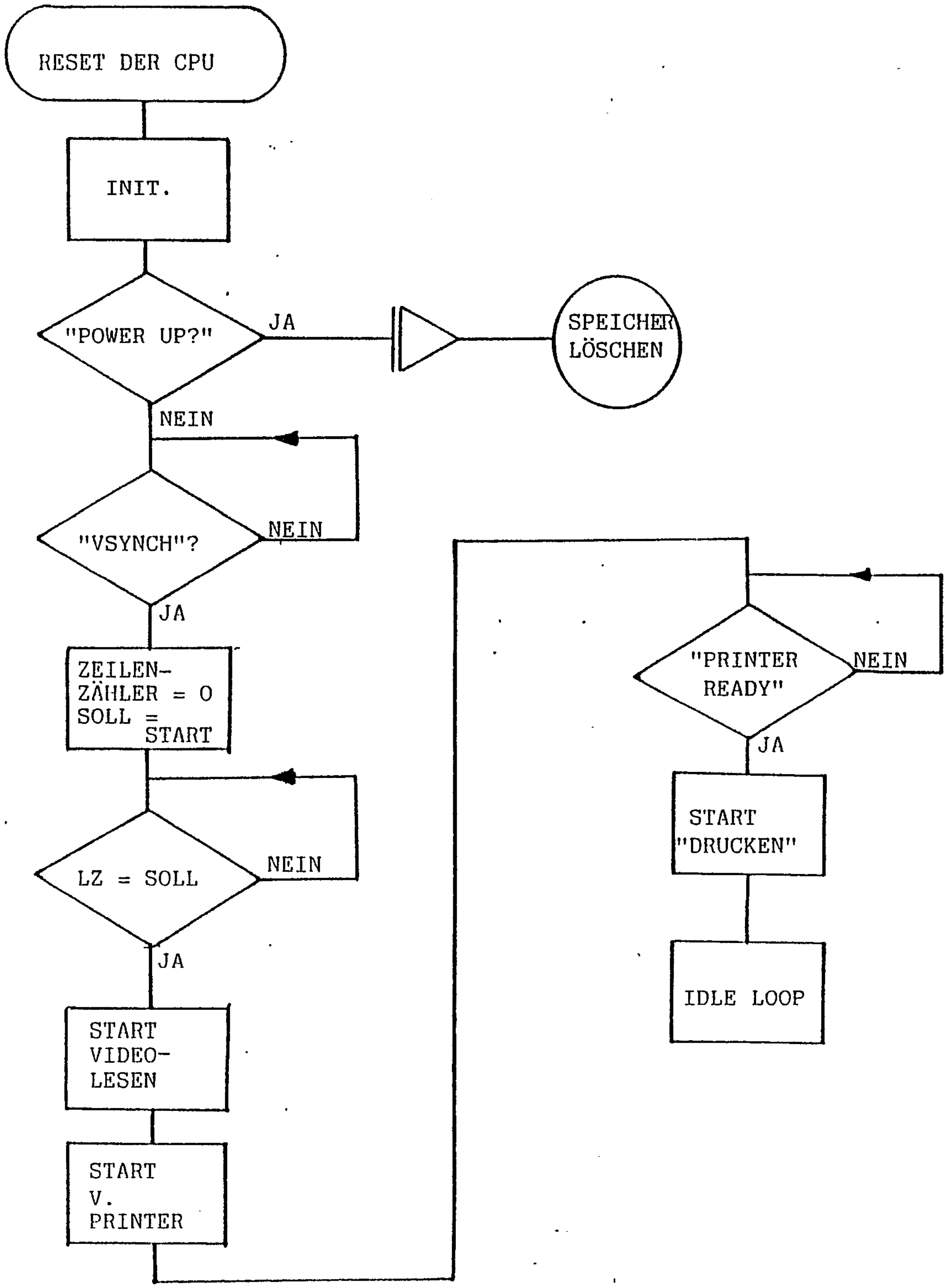
RESET DER CPU
INIT.
"POWER UP?"
JA
SPEICHER LÖSCHEN
NEIN
"VSYNCH"?
NEIN
JA
ZEILEN-ZÄHLER = 0 SOLL = START
LZ = SOLL
NEIN
JA
START VIDEO-LESEN
START V. PRINTER
"PRINTER READY"
NEIN
JA
START "DRUCKEN"
IDLE LOOP

FIG. 4

FIG. 5b

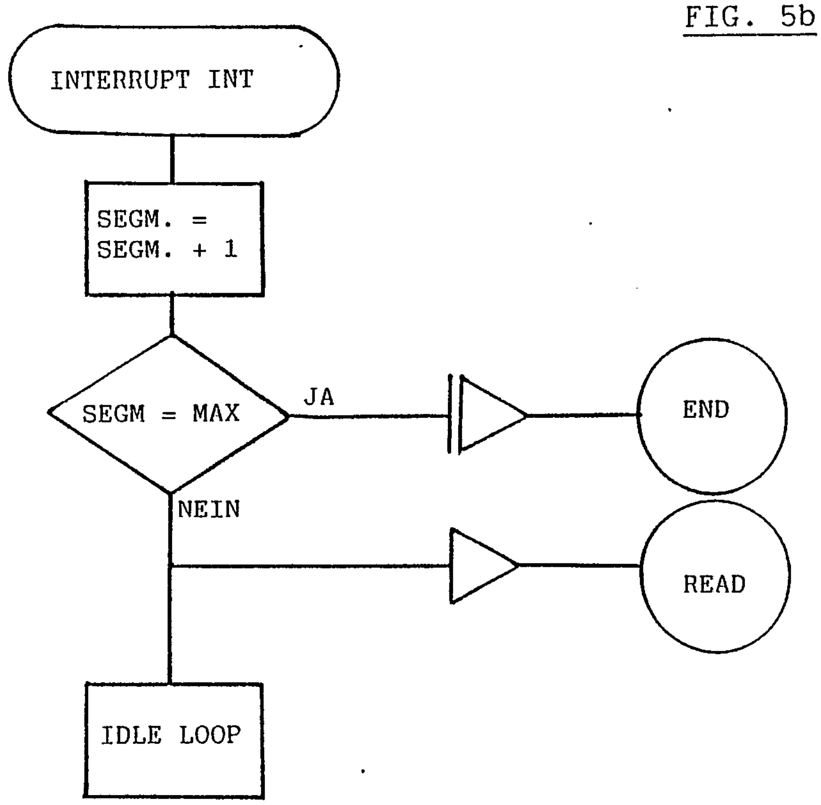
INTERRUPT INT
SEGM. =
SEGM. + 1
SEGM = MAX
JA
END
NEIN
READ
IDLE LOOP

FIG. 5a

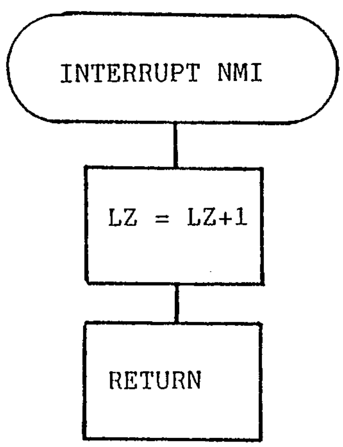
INTERRUPT NMI
LZ = LZ+1
RETURN

FIG. 6a

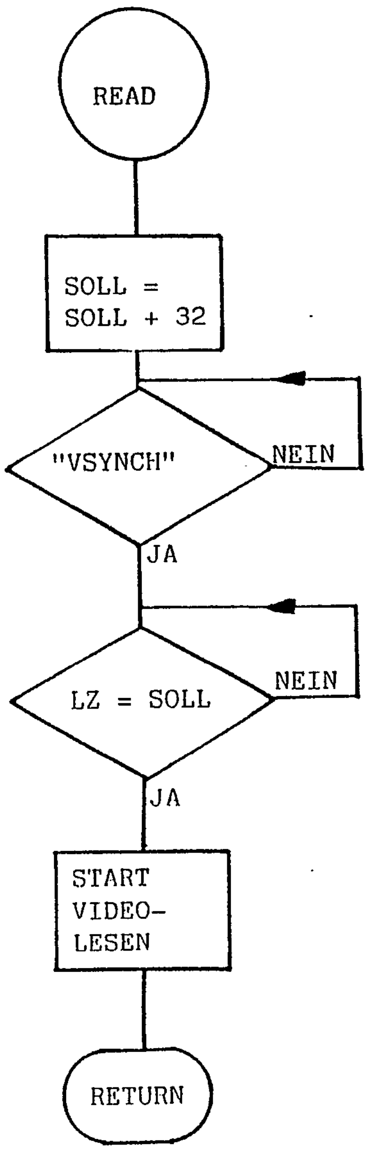
READ
SOLL =
SOLL + 32
"VSYNCH"
NEIN
JA
LZ = SOLL
NEIN
JA
START
VIDEO-
LESEN
RETURN

FIG. 6b

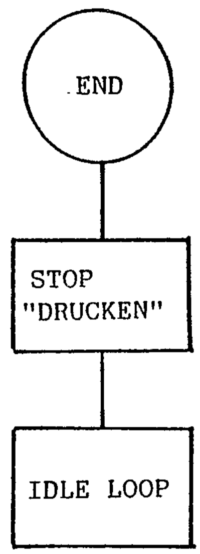
END
STOP
"DRUCKEN"
IDLE LOOP

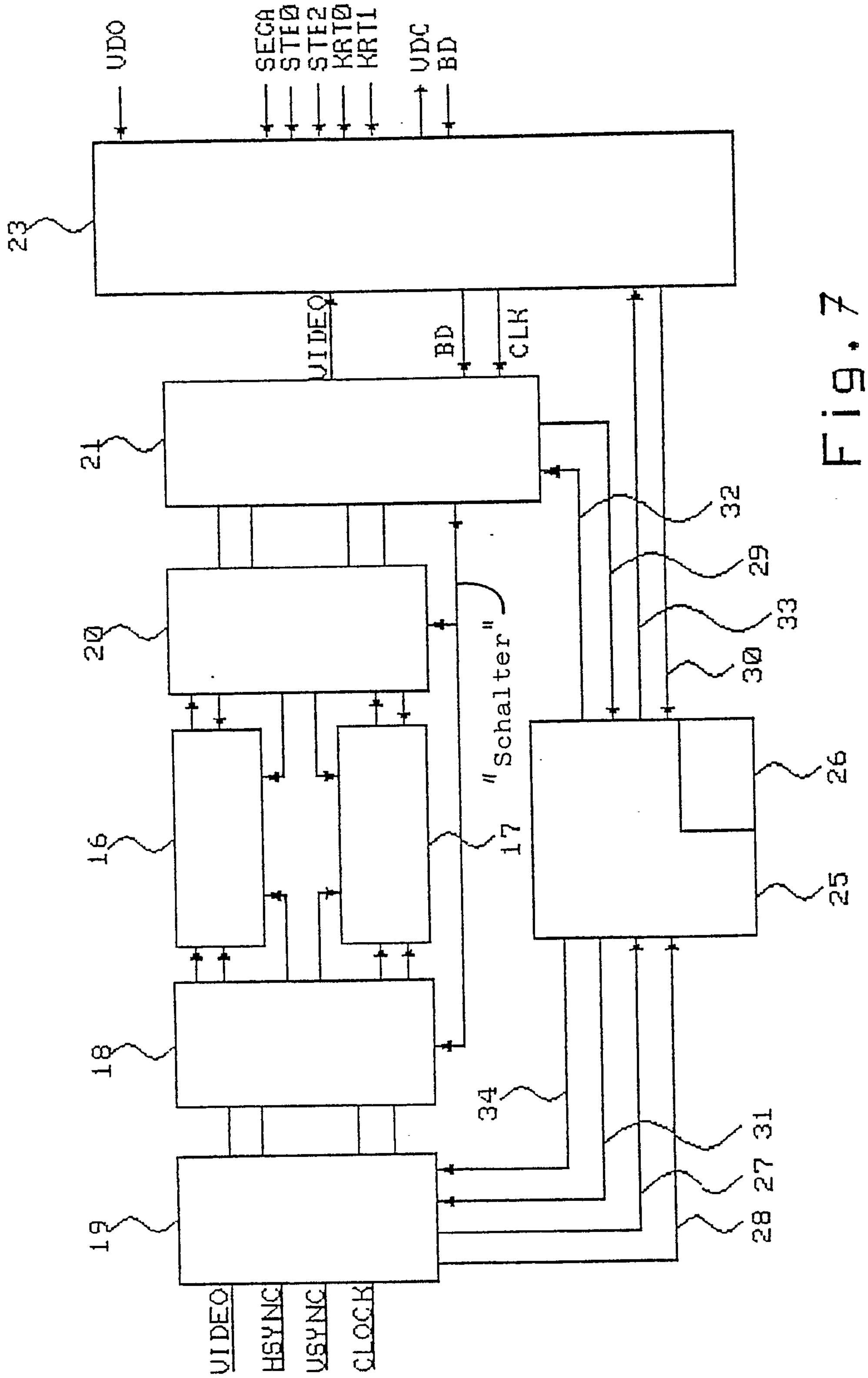
VDO
SEGA
STEØ
STE2
KRTØ
KRT1
VDC
BD
23
VIDEO
BD
CLK
21
32
29
33
3Ø
20
"Schalter"
16
17
26
25
18
34
31
27
28
19
VIDEO
HSYNC
VSYNC
CLOCK

Fig. 7

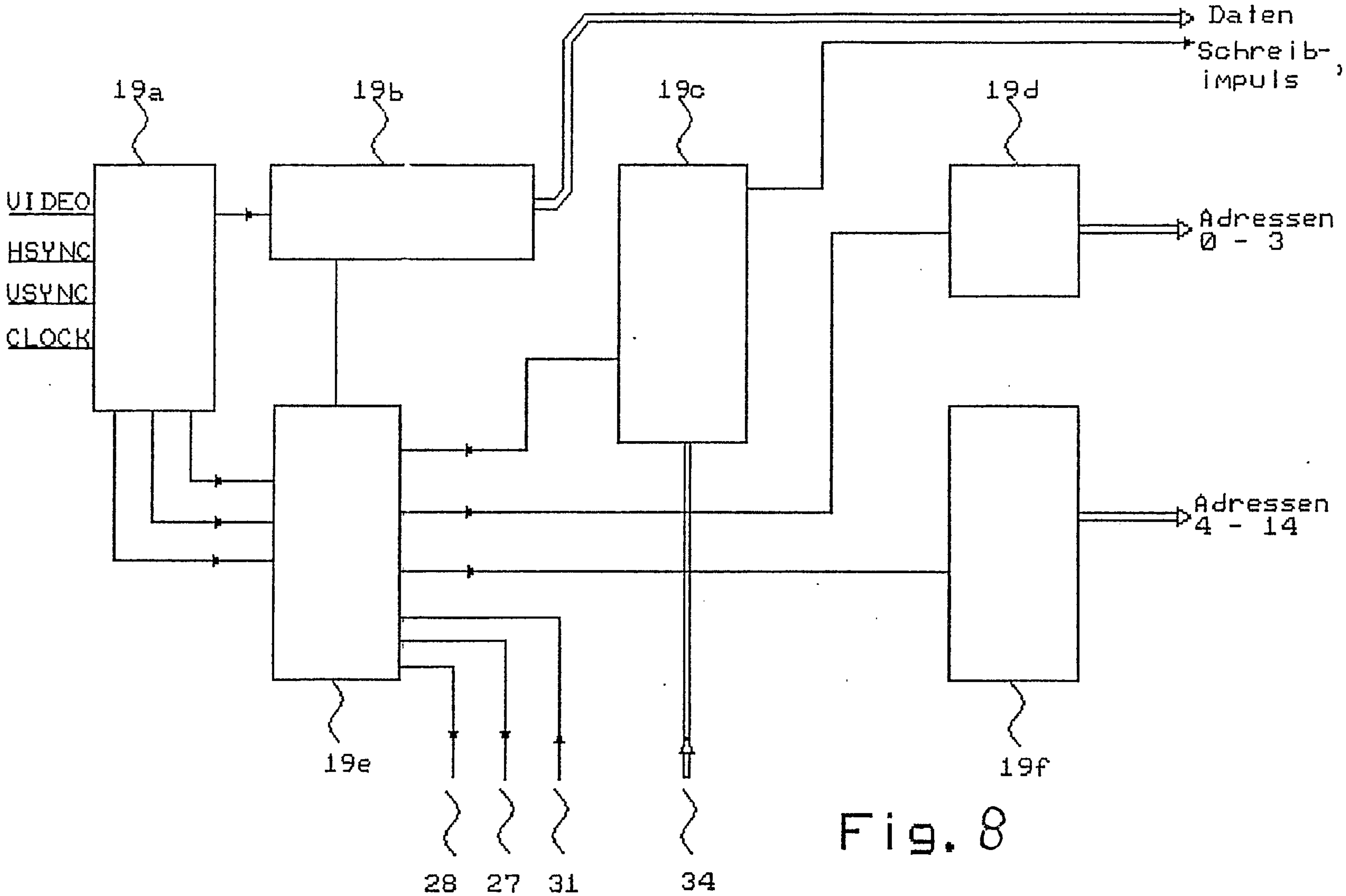
Daten
Schreib-impuls
Adressen Ø - 3
Adressen 4 - 14
19a
19b
19c
19d
19e
19f
VIDEO
HSYNC
VSYNC
CLOCK
28
27
31
34

Fig. 8

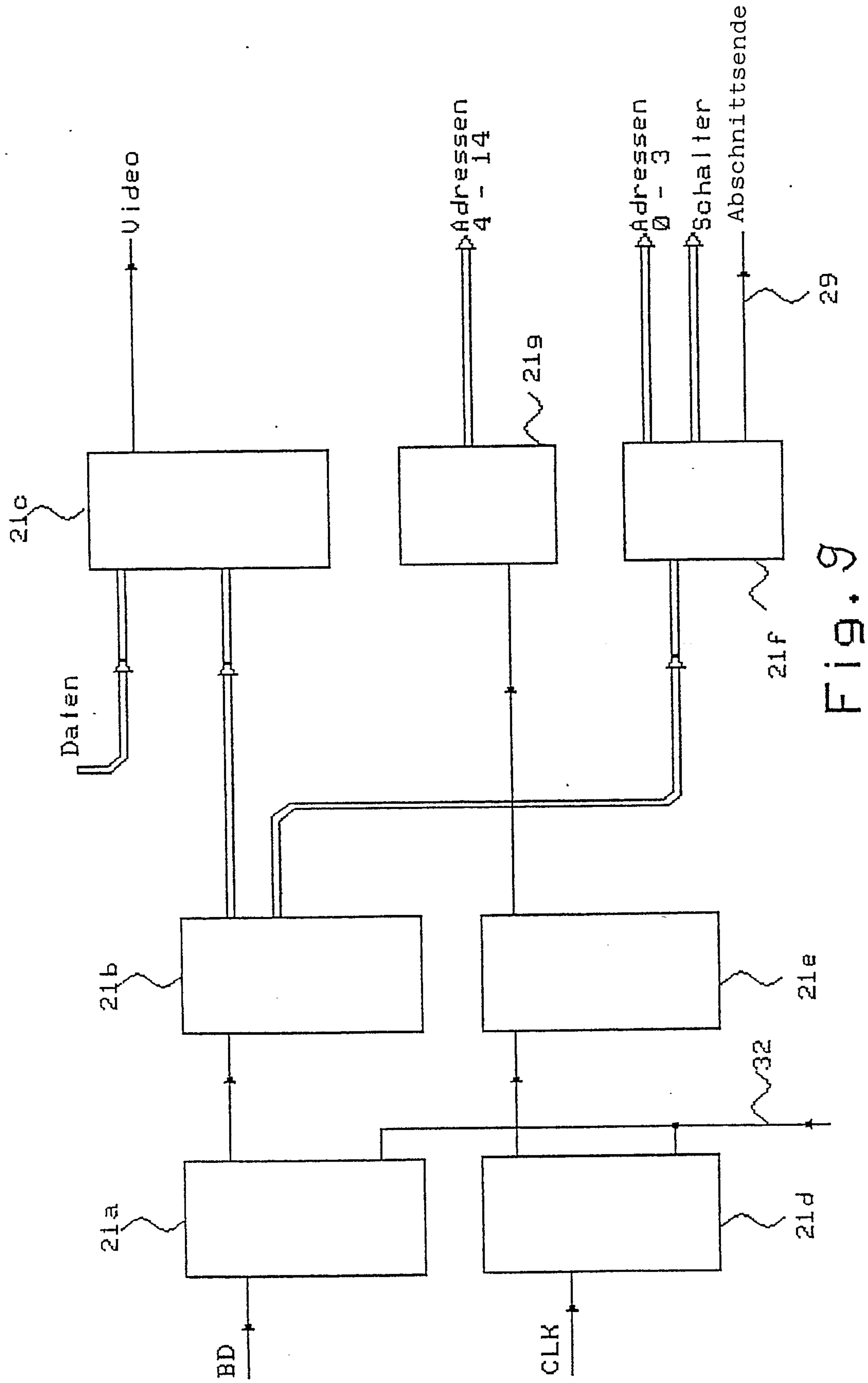
Video
Adressen
4 - 14
Adressen
Ø - 3
Schalter
Abschnittsende
29
21g
21c
Daten
21f
21b
21e
32
21a
21d
BD
CLK

Fig. 9

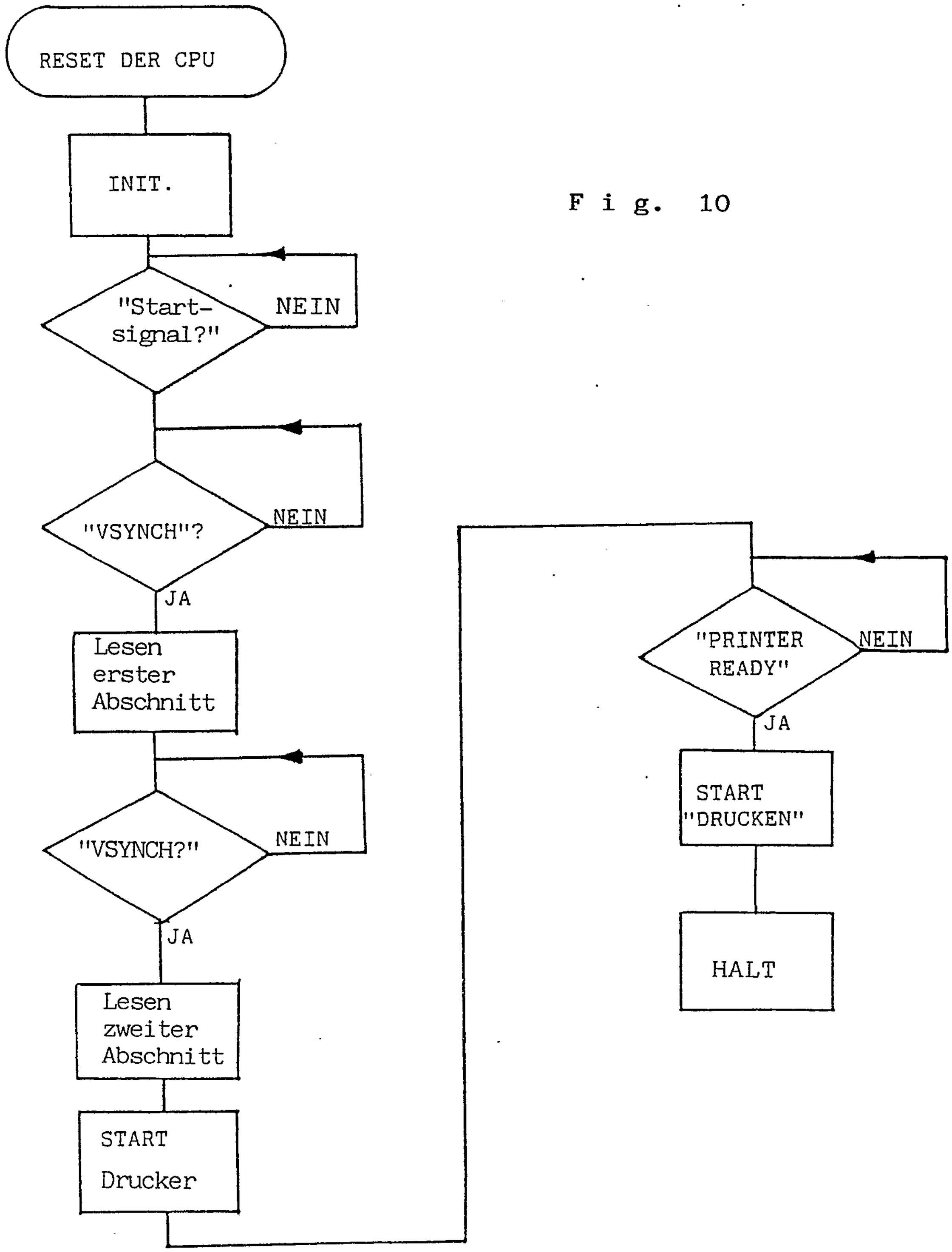
RESET DER CPU
INIT.
"Start-signal?"
NEIN
"VSYNCH"?
NEIN
JA
Lesen erster Abschnitt
"VSYNCH?"
NEIN
JA
Lesen zweiter Abschnitt
START Drucker
"PRINTER READY"
NEIN
JA
START "DRUCKEN"
HALT

Fig. 10

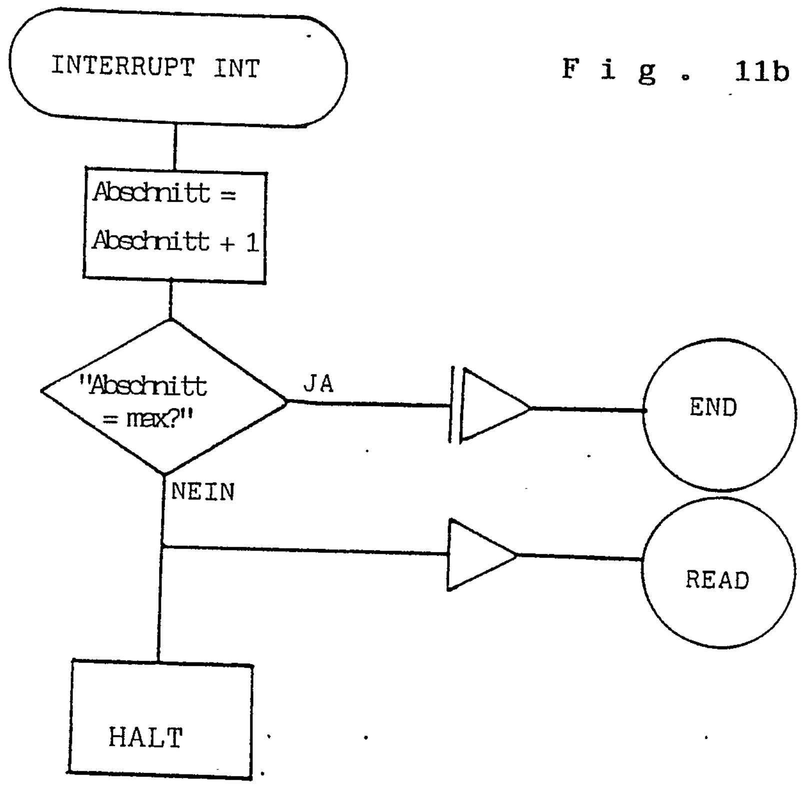


Fig. 11b

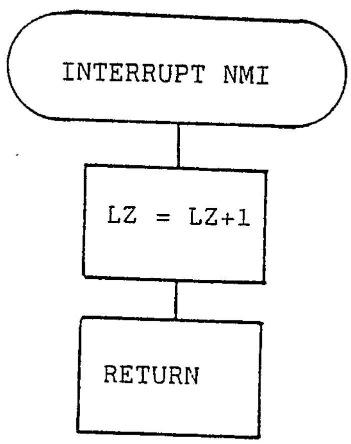


Fig. 11a

Fig. 12a

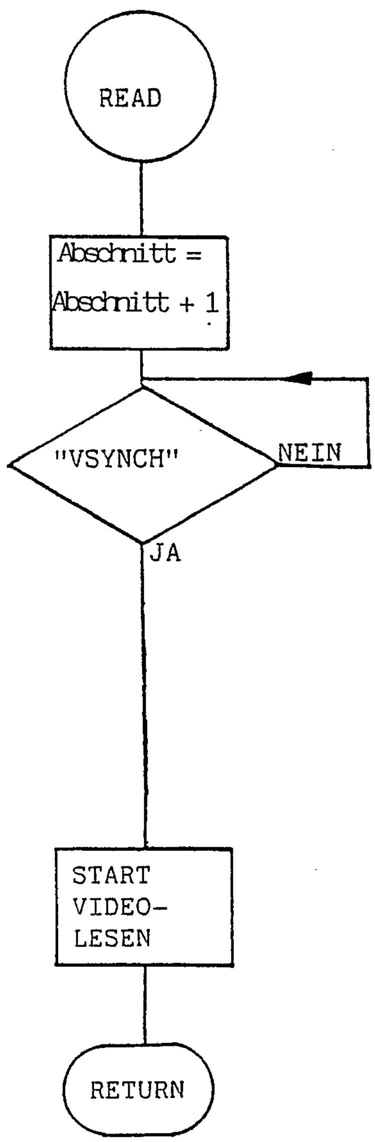


Fig. 12b